# EUROPEAN PATENT SPECIFICATION

(11) **EP 1 332 945 B1**
(45) Date of publication and mention of the grant of the patent: **03.11.2004**
(21) Application number: 03001611.7
(22) Date of filing: 24.01.2003
(51) Int. Cl.: B62D 5/12

(54) **Stirrup coupling between steering gear and support**
Verbindungsbügel zwischen Lenkgetriebe und Aufnahme
Dispositif connecteur en forme d étrier entre boîtier de direction et support

(30) Priority: 04.02.2002 IT PD20020024
(43) Date of publication of application: 06.08.2003
(73) Proprietor: CARRARO S.P.A., I-35011 Campodarsego (Padova) (IT)
(72) Inventor: PIROTTA, Santino, 20069 Vaprio d'Adda (MI) (IT); SCIREA, Paolo, 20092 Cinisello Balsamo (MI) (IT); FERRARI, Gabriele, 26100 Cremona (IT)
(74) Representative: Fabris, Stefano (IT)

(56) References cited:
- EP-A- 1 129 925
- FR-A- 2 645 819
- US-A- 4 372 017

## Description

This invention relates to a fluid-dynamic jack unit and corresponding support, especially for steering control in steering axles as e.g. disclosed in FR 2 645 819A.

In this technical context double rod double-acting jacks whose cylinders are immobilised on the axle support by anchor plates fixed to the jack on one side and to the support on the other with bolted and centering bush connections are used.

This connection system is relatively bulky and complex to construct because an accurate tolerance is needed so that the fixing holes between the plate and support are perfectly in line.

In addition to this the cylinder has to be constructed with a sleeve, to the opposite ends of which is fixed a corresponding cap for example by means of a threaded or welded connection between the sleeve of the cylinder and the cap, or by means of flanged connections secured by screws and bolts. Again in this case there is an increase in the weight of the jack and its manufacturing costs.

The problem which this invention addresses is that of simplifying the jack and support unit so that it is functionally and structurally capable of overcoming all the disadvantages mentioned in connection with the cited known art.

This problem is resolved by the invention through a fluid-dynamic jack unit and corresponding support, particularly for the control of steering in steering axles, constructed in accordance with claim 1.

The advantages and characteristics of the invention will become clear from the following detailed description of a preferred but not exclusive embodiment described below, by way of indication and without limitation, with reference to the appended drawings, in which:
- Figure 1 is a diagrammatical plan view from above of an axle for agricultural tractors equipped with a steering jack and corresponding support according to the invention,

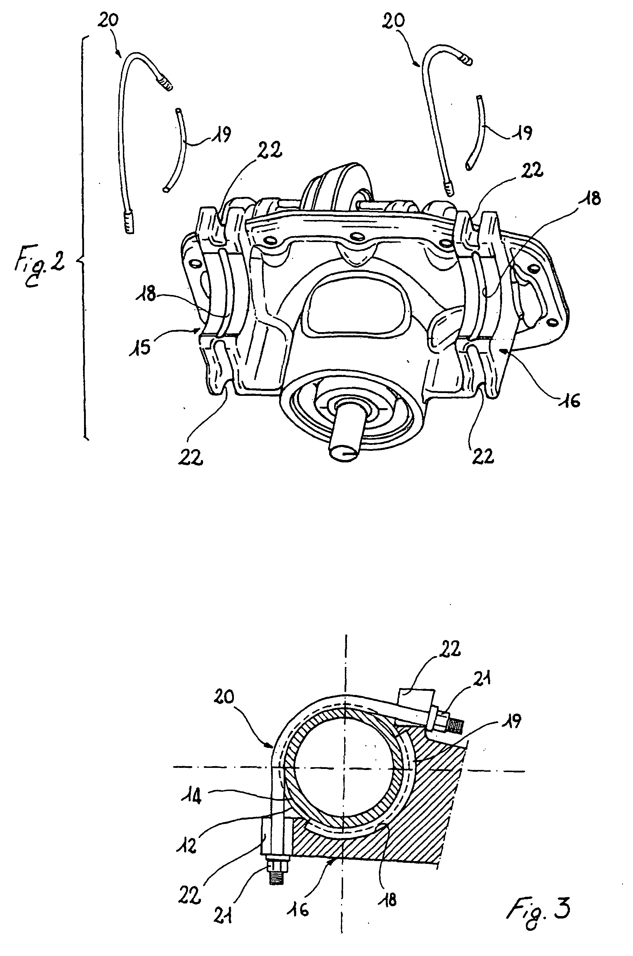

- Figure 2 is an exploded perspective view of a detail of the axle in Figure 1,
- Figure 3 is a view in cross-section along the plane III-III in Figure 1,
- Figure 4 is a view in cross-section of the steering jack for the axle in Figure 1.

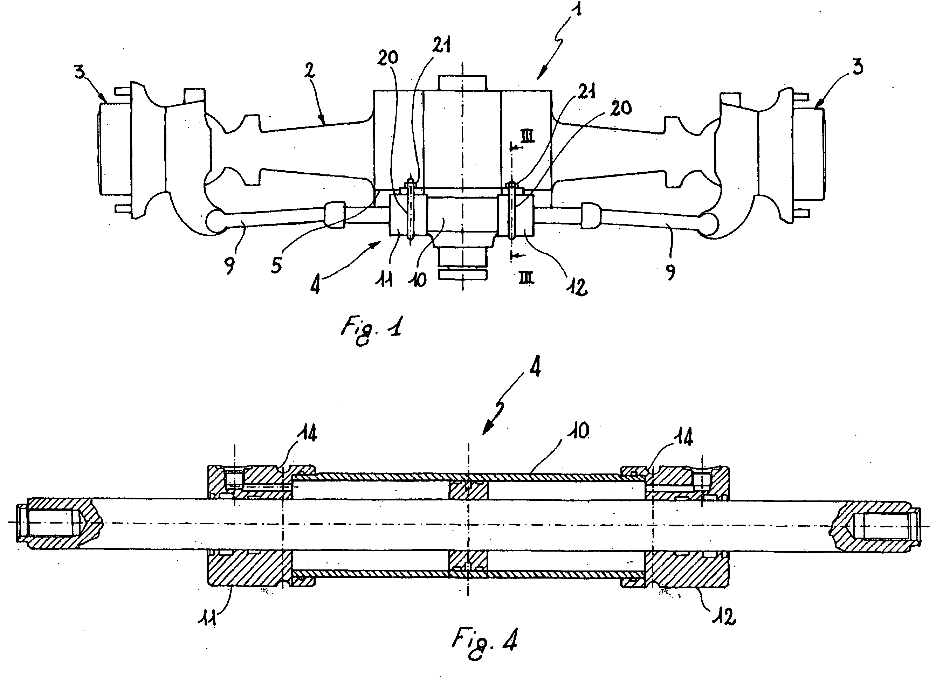

In Figure 1, 1 indicates as a whole a steering axle for vehicles, in particular for agricultural tractors. Axle 1 comprises a beam 2, to the opposite ends of which are articulated corresponding hubs 3 which can be orientated by means of a steering jack 4 which is mounted on beam 2 by means of a support 5. Steering jack 4 (Figures 1 and 4) is of the double rod double-acting type and is connected to corresponding hubs 3 by arms 9 (Figure 1).

Jack 4 comprises a cylindrical tubular sleeve 10 which is closed at the opposing ends by corresponding caps 11, 12 nesting onto sleeve 10 with a leaktight connection. Apart from the leaktight connection, caps 11, 12 have no other mechanical connection retaining them axially on the sleeve but they are however secured upon it as will be clarified below.

A first annular recess 14 having a semicircular cross-section is provided circumferentially on the exterior of each cap. Two cradle structures 15, 16 which match the profile of the cylindrical skirt of corresponding caps 11, 12 are provided correspondingly in support 5, which is preferably a structural part of beam 2, for example being incorporated in the support cover for the differential in the case of the drive axle. In each cradle structure there is a second recess 18 in which there is (removably) nested part (for example approximately half the circumference) of a key 19 in the shape of a length of a toroid. The remaining part of key 19 (that is the other half of the circumference) engages first recess 14 through the part of it which faces the cradle structure.

The remaining length of first recess 14 is engaged over at least some of its length by the cylindrical rod of a stirrup 20 which has opposing threaded ends on each of which a corresponding nut 21 is threaded.

In turn the threaded ends are housed in corresponding yoke-like passages 22 of the cradle structures, the backs of which provide shoulder stops for nut fixings 21 (and the corresponding washers). Preferably these shoulders have an inclined plane converging towards the base of the passage grooves so that, by tightening the corresponding nut, stirrup 20 tends to lock on jack 4.

Caps 11, 12 are axially tightened onto sleeve 10 by providing that the distance (spacing) between first recesses 14, measured axially on cylinder 10, is equal to or slightly greater than the corresponding distance (spacing) between second recesses 18 in such a way that, as a result of the effect of tightening the stirrup against the support, axial restraint is applied to the caps as a result of the interaction between the stirrups and the recesses which secures the caps on the sleeve, holding them in position. The set of recesses 14, 18 and key 19 therefore provides both a coupling of the recess and key type which plays a major part in axially holding the jack on the support, and sealing the cylinder through the effect of axially holding the caps against the sleeve.

The invention thus solves the problem stated and offers many advantages in comparison with the technical solutions known hitherto. In particular it lends itself to advantageous savings in manufacture, reduction in the weight of the jack/support unit, ease of fitting the same, ease of access for repair and easy storage of its components.

## Claims

1. A fluid-dynamic jack (4) unit and corresponding support (5), especially for steering control in steering axles, in which the jack (4) is secured to the support (5) by fixing means, **characterized in that** the fixing means comprise at least one recess (14, 18) and key (19) coupling between the jack (4) and support (5) to axially secure the jack on the support and at least one stirrup (20) between the jack and the support to keep the recess and key in the said coupling mutually engaged.

2. A fluid-dynamic jack (4) unit and corresponding support (5) according to claim 1 in which the jack (4) comprises a tubular sleeve (10) which is sealed at at least one of its axial ends by a cap (11, 12) and the said at least one coupling is provided between the said cap (11, 12) and the said support (5) and is such that when the said stirrup (20) is tightened the coupling ensures that the said cap (11, 12) is axially secured sealing the said sleeve (10).

3. A fluid-dynamic jack (4) unit and corresponding support (5) according to claim 2 in which the said sleeve (10) is sealed at the opposite axial ends by two caps (11, 12) both of which are secured to the said support (5) by a recess (18) and key (19) and provided with corresponding stirrups (20), the said caps being held on the said sleeve (10) sealing the said cylinder as a consequence of tightening of the corresponding stirrups (20).

4. A fluid-dynamic jack (4) unit and corresponding support (5) according to one or more of the foregoing claims in which each recess and key coupling comprises a first annular recess (14) provided circumferentially on a cap (11, 12) of the jack (4) and engaged over a length thereof by the said key (19) and over a remaining length thereof by a length of the said stirrup (20).

5. A fluid-dynamic jack (4) unit and corresponding support (5) according to claim 4 in which each recess and key coupling comprises a second recess (18) provided in a saddle of the said support (5), the said key (19) nesting partly in the said first (14) and partly in the said second (18) recess.

6. A fluid-dynamic jack (4) unit and corresponding support (5) according to one or more of the foregoing claims in which the first recesses (14) are provided in the said caps (11, 12) and the spacing between the first recesses (14) is equal to or slightly greater than the spacing between the second recesses (18).

7. A fluid-dynamic jack (4) unit and corresponding support (5) according to one or more of the foregoing claims in which the said key (19) has the shape of a length of toroid.

8. A fluid-dynamic jack (4) unit and corresponding support (5) according to one or more of the foregoing claims in which the said stirrups (20) comprise at least one threaded end extending through a passage in the said saddle acting as an adjustable tie bar to tighten the said cylinder into its corresponding support (5) saddle.

9. A fluid-dynamic jack (4) unit and corresponding support (5) according to claim 8, in which both the ends of the said stirrups (20) are threaded to act as tie bars and the support (5) has corresponding stop surfaces for a locking nut (21) for the corresponding tie bar at the opening of at least one of the corresponding passages (22), the said stop surfaces being constructed with an inclined plane so as to lock the tie bar against the cylinder through the effect of tightening the corresponding stirrup (20).

10. A steering axle incorporating a steering jack (4) and a support (5) constructed in accordance with one or more of the foregoing claims.

11. An axle according to claim 10 in which the said support (5) is a structural part of a beam of the said axle.

## Patentansprüche

1. Fluiddynamische Lenkgestängeeinheit (4) und korrespondierende Lenkführung (5), insbesondere für die Lenksteuerung der Lenkachsen, in denen die Lenkgestängeeinheit (4) an die Lenkführung (5) mithilfe von Fixiervorrichtungen befestigt ist; **dadurch gekennzeichnet, dass** die Fixiervorrichtungen mindestens eine Nut (14, 18) und einen Lenkpassfinger (19) aufweisen, die zwischen der Lenkgestängeeinheit (4) und der Lenkführung (5) zusammenkoppeln, um die Lenkgestängeeinheit mit der Lenkführung axial zu befestigen, und dass die Fixiervorrichtungen mindestens einen Verbindungsbügel (20) zwischen der Lenkgestängeeinheit und der Lenkführung aufweisen, um die Nut und den Lenkpassfinger bei einem Koppeln zusammen in Eingriff zu halten.

2. Fluiddynamische Lenkgestängeeinheit (4) und korrespondierende Lenkführung (5) gemäß Anspruch 1, wobei die Lenkgestängeeinheit (4) eine Röhrenlenkwelle (10) aufweist, die an mindestens einem von deren axialen Enden mittels einer Verschlusskappe (11, 12) verschlossen ist, und die mindestens eine Kopplung zwischen der Verschlusskappe (11, 12) und der Lenkführung (5) bereitstellt und die dergestalt ist, dass, wenn der Verbindungsbügel (20) angezogen ist, die Kopplung gewährleistet, dass die Verschlusskappe (11,12) axial befestigt ist, wobei die Röhrenlenkwelle (10) abgeschirmt wird.

3. Fluiddynamische Lenkgestängeeinheit (4) und korrespondierende Lenkführung (5) gemäß Anspruch 2, wobei die Röhrenlenkwelle (10) durch die zwei Verschlusskappen (11, 12) an den sich gegenüberliegenden, axialen Enden abgeschlossen ist, von denen beide über eine Nut (18) und einem Lenkpassfinger (19) an der Lenkführung (5) befestigt und mit den korrespondierenden Verbindungsbügeln (20) bereitgestellt sind, wobei die Verschlusskappen auf der Röhrenlenkwelle (10) getragen werden und den Zylinder verschließen als Folge des Anziehens der korrespondierenden Verbindungsbügel (20).

4. Fluiddynamische Lenkgestängeeinheit (4) und korrespondierende Lenkführung (5) gemäß einem oder mehreren der voranstehenden Ansprüche, wobei jede Nut- und Lenkpassfingerkopplung eine erste, ringförmige Nut (14) aufweist, die auf einer Verschlusskappe (11,12) der Lenkgestängeeinheit (4) kreisumfangsseitig vorgesehen ist, und die über deren Lenkpassfingerlänge sowie über deren restliche Länge mit einer Verbindungsbügellänge (20) in Eingriff steht.

5. Fluiddynamische Lenkgestängeeinheit (4) und korrespondierende Lenkführung (5) gemäß Anspruch 4, wobei jede Nut- und Lenkpassfingerkopplung eine zweite Nut (18) aufweist, die in einem Längssattel der Lenkführung (5) vorgesehen ist, wobei sich der Lenkpassfinger (19) anteilig in der ersten (14) und anteilig in der zweiten (18) Nut positioniert.

6. Fluiddynamische Lenkgestängeeinheit (4) und korrespondierende Lenkführung (5) gemäß einem oder mehreren der voranstehenden Ansprüche, wobei die ersten Nutaussparungen (14) in den Verschlusskappen (11, 12) vorgesehen sind, und wobei der Abstand zwischen den ersten Nutaussparungen (14) dem Abstand zwischen den zweiten Nutaussparungen (18) entspricht oder etwas größer ist.

7. Fluiddynamische Lenkgestängeeinheit (4) und korrespondierende Lenkführung (5) gemäß einem oder mehreren der voranstehenden Ansprüche, wobei der Lenkpassfinger (19) die Form einer Ringspulenlänge aufweist.

8. Fluiddynamische Lenkgestängeeinheit (4) und korrespondierende Lenkführung (5) gemäß einem oder mehreren der voranstehenden Ansprüche, wobei die Verbindungsbügel (20) mindestens einen Gewindeanschluss aufweisen, der sich über eine Durchführung in den Längssattel erstreckt und als nachstellbare Zugstange wirkt, um den Zylinder in dessen korrespondierenden Lenkführungssattel (5) anzuziehen.

9. Fluiddynamische Lenkgestängeeinheit (4) und korrespondierende Lenkführung (5) gemäß Anspruch 8, wobei beide Enden der Verbindungsbügel (20) gewindeverschraubt sind, um als Zugstangen wirken zu können, und wobei die Lenkführung (5) korrespondierende Stoppflächen aufweist, die als Feststellmutter (21) für die korrespondierenden Zugstangen an der Öffnung von mindestens einer der korrespondierenden Durchführungen (22) dienen, wobei die Stoppflächen mit einer geneigten Ebene konstruiert sind, um so die Zugstange gegen den Zylinder durch den Anziehungseffekt des korrespondierenden Verbindungsbügels (20) abzuriegeln.

10. Lenkachse umfassend eine Lenkgestängeeinheit (4) und korrespondierende Lenkführung (5), die gemäß einem oder mehreren der voranstehenden Ansprüche ausgestaltet ist.

11. Lenkachse gemäß Anspruch 10, wobei die Lenkführung (5) ein Konstruktionsteil eines Starrachskörpers ist.

## Revendications

1. Unité de vérin à dynamique des fluides (4) et support correspondant (5), particulièrement destinée au contrôle de direction des essieux de direction, dans laquelle le vérin (4) est fixé au support (5) par des moyens de fixation, **caractérisée en ce que** les moyens de fixation comprennent au moins un couplage d'évidement (14, 18) et de clavette (19) entre le vérin (4) et le support (5) pour fixer de manière axiale le vérin sur le support et au moins un étrier (20) entre le vérin et le support pour maintenir l'évidement et la clavette dans ledit couplage mutuellement engagés.

2. Unité de vérin à dynamique des fluides (4) et support correspondant (5) selon la revendication 1, dans laquelle le vérin (4) comprend un manchon tubulaire (10) qui est fermé hermétiquement au niveau d'au moins l'une de ses extrémités axiales par un bouchon (11, 12) et ledit, au moins un, couplage se trouve entre ledit bouchon (11, 12) et ledit support (5) et est tel que, lorsque ledit étrier (20) est serré, le couplage assure que ledit bouchon (11, 12) est fixé de manière axiale fermant hermétiquement ledit manchon (10).

3. Unité de vérin à dynamique des fluides (4) et support correspondant (5) selon la revendication 2, dans laquelle ledit manchon (10) est fermé hermétiquement au niveau des extrémités axiales opposées par deux bouchons (11, 12) dont les deux sont fixés audit support (5) par un évidement (18) et une clavette (19) et munis d'étriers correspondants (20), lesdits bouchons étant maintenus sur ledit manchon (10) fermant hermétiquement ledit cylindre en conséquence du serrage des étriers correspondants (20).

4. Unité de vérin à dynamique des fluides (4) et support correspondant (5) selon une ou plusieurs des revendications précédentes, dans laquelle chaque couplage d'évidement et de clavette comprend un premier évidement annulaire (14) situé circonférentiellement sur un bouchon (11, 12) du vérin (4) et engagé sur une longueur de celui-ci par ladite clavette (19) et sur une longueur restante de celui-ci d'une longueur dudit étrier (20).

5. Unité de vérin à dynamique des fluides (4) et support correspondant (5) selon la revendication 4, dans laquelle chaque couplage d'évidement et de clavette comprend un second évidement (18) situé dans une selle dudit support (5), ladite clavette (19) s'insérant partiellement dans ledit premier (14) et partiellement dans ledit second évidement (18).

6. Unité de vérin à dynamique des fluides (4) et support correspondant (5) selon une ou plusieurs des revendications précédentes, dans laquelle les premiers évidements (14) sont situés dans lesdits bouchons (11, 12) et l'espacement entre les premiers évidements (14) est égal ou légèrement supérieur à l'espacement entre les seconds évidements (18).

7. Unité de vérin à dynamique des fluides (4) et support correspondant (5) selon une ou plusieurs des revendications précédentes, dans laquelle ladite clavette (19) a la forme d'une longueur de tore.

8. Unité de vérin à dynamique des fluides (4) et support correspondant (5) selon une ou plusieurs des revendications précédentes, dans laquelle lesdits étriers (20) comprennent au moins une extrémité filetée s'étendant à travers un passage dans ladite selle fonctionnant comme une traverse ajustable pour serrer ledit cylindre dans sa selle de support correspondant (5).

9. Unité de vérin à dynamique des fluides (4) et support correspondant (5) selon la revendication 8, dans laquelle les deux extrémités desdits étriers (20) sont filetées pour fonctionner comme des traverses et le support (5) a des surfaces d'arrêt correspondantes pour un écrou de blocage (21) pour la traverse correspondante au niveau de l'ouverture d'au moins l'un des passages (22) correspondants, lesdites surfaces d'arrêt étant construites avec un plan incliné de façon à bloquer la traverse contre le cylindre par l'effet de serrage de l'étrier correspondant (20).

10. Essieu de direction incorporant un vérin (4) et un support (5) de direction construit conformément à une ou plusieurs des revendications précédentes.

11. Essieu selon la revendication 10 dans lequel ledit support (5) est une partie structurelle d'une poutre dudit essieu.
